# EUROPÄISCHE PATENTSCHRIFT

(11) **EP 1 418 758 B1**
(45) Veröffentlichungstag und Bekanntmachung des Hinweises auf die Patenterteilung: **31.03.2010**
(21) Anmeldenummer: 03090326.4
(22) Anmeldetag: 01.10.2003
(51) Int. Cl.: H04N 7/173, H04N 7/15

(54) **Verfahren und Vorrichtung zum Informationsaustausch sowie entsprechendes Computerprogramm-Erzeugnis und entsprechendes computerlesbares Speichermedium**
Method and apparatus for exchanging information and computer program thereof and corresponding computer-readable storage medium
Procédé et appareil d'échange d'informations et logiciel d'ordinateur correspondant et support de mémorisation correspondant , lisible par ordinateur

(30) Priorität: 29.10.2002 DE 10250356; 01.07.2003 DE 10330362
(43) Veröffentlichungstag der Anmeldung: 12.05.2004
(73) Patentinhaber: Volkswagen AG, 38436 Wolfsburg (DE)
(72) Erfinder: Hoppe, Edgar, 38446 Wolfsburg (DE); Bobrowski, Peter, 38176 Wendeburg (DE); Bloch, Henning, 38110 Braunschweig (DE); Goeke, Clemens, 38440 Wolfsburg (DE); Knoop, Melanie, 38527 Meine (DE); Nowak, Kerstin, 38440 Wolfsburg (DE); Briam, Jürgen, 38448 Wolfsburg (DE); Schurz, Sandra, 38533 Vordorf (DE); Janz, Carsten, 38448 Wolfsburg (DE); Thoms, Heiko, 31234 Edemissen (DE)
(74) Vertreter: Schneider, Henry

(56) Entgegenhaltungen:
- WO-A-01/15427
- US-A- 5 828 839
- US-A1- 2002 133 405
- US-B1- 6 259 442
- US-B1- 6 351 270

## Beschreibung

Die Erfindung betrifft ein Verfahren und eine Vorrichtung zum Informationsaustausch sowie ein entsprechendes Computerprogramm und ein entsprechendes computerlesbares Speichermedium, welche insbesondere einsetzbar sind für die Einrichtung eines interaktiven Unternehmensfemsehens (iTV), speziell eines Live-Broadcast-Systems, bei welchem der Zuschauer seinen vernetzten Arbeitsplatzrechner zur Teilnahme nutzt.

Die kontinuierliche Steigerung des Elektronikanteils in komplexen Produkten, insbesondere in Fahrzeugen, und die rasante Entwicklung dieser Komponenten erfordern eine kontinuierliche Qualifikation der Mitarbeiter in der Handelsorganisation.

Insbesondere ist eine Weiterbildung von Mitarbeitern in örtlich verteilten Filialen oder dergleichen durch Bilddatenübertragung wünschenswert.

Auf dem Gebiet der Bilddatenübertragung ist u.a. eine Lösung aus der Veröffentlichung US 2002/0133405 A1 eine Lösung bekannt, bei der interaktive Inhalte unter Verwendung des Internetprotokolls (IP) bereitgestellt werden zur Verbesserung der Interaktivität.

Eine andere Lösung zur Behandlung von Videoinhalten in einem Netzwerk wird in der internationalen Anmeldung WO 01/15427 A2 vorgestellt.

Die Wiedergabe eines Miniaturvideos in einem Logo auf einer grafischen Benutzeroberfläche wird in der Veröffentlichung US 6,351,270 B1 beschrieben.

In der Veröffentlichung US 6,259,442 B1 wird eine Lösung zum Herunterladen von Software von einem Server auf einen Client beschrieben, wobei der Server automatisch Updates für die Software über einen Satellitenlink auf den Client herunterlädt.

Ein Chat-Room zur Diskussion von laufenden Fernseh- oder Radioprogrammen wird in der Veröffentlichung US 5,828,839 vorgestellt, wobei ein Chat-Room-Fenster und ein Fenster mit Bezug zu dem besprochenen Femseh- oder Radioprogramm auf einem Bildschirm dargestellt werden.

Die Aufgabe der Erfindung besteht darin, ein Verfahren und eine Anordnung zum Informationsaustausch sowie ein entsprechendes Computerprogramm und ein entsprechendes digitales Speichermedium bereitzustellen, welche eine direkte Informationsvermittlung oder Qualifikation von Personenkreisen, die sich an verschiedenen Standorten aufhalten, durch Nutzung moderner Kommunikationstechnik realisieren.

Diese Aufgabe wird erfingdungsgemäß durch die Merkmale in den Ansprüchen 1, 15, 16 sowie 17 gelöst. Zweckmäßige Ausgestaltungen der Erfindung sind in den Unteransprüchen enthalten.

Ein besonderer Vorteil des erfindungsgemäßen Verfahrens besteht darin, dass ein Informationsaustausch im direkten Dialog zwischen räumlich getrennten Teilnehmern und mit flexibel wechselnden Teilnehmerkreisen erfolgen kann, indem
- Informations-Sendungen in einem Broadcast-Standard produziert und live aus einem Studio gesendet werden;
- eine Digitalisierung der gesendeten Daten und anschließend eine Übertragung der digitalisierten Daten als IP-Multicast-Pakete über Satellit erfolgt;
- zum Empfang der IP-Multicast-Pakete ein TV-Decoder dient, welcher die empfangenen Daten in ein Daten- und/oder Kommunikationsnetz einspeist;
- auf Datenverarbeitungseinrichtungen wie beispielsweise PC oder Arbeitsplatzrechner eine Software installiert wird, wobei die Software, nachdem die Datenverarbeitungseinrichtung an das Daten- und/oder Kommunikationsnetz angeschlossen wurde, den Empfang der Informations-Sendungen und die Nutzung von wenigstens einem Teil der durch eine Informations-Sendung bereitgestellten Funktionen ermöglicht;
- der Zugang zu einer Informations-Sendung durch Einwahl über ein Portal erfolgt und
- ein interaktiver Informationsaustausch durch Nutzung der durch die Informations-Sendung bereitgestellten Funktionen über Kommunikationsverbindungen zwischen Datenverarbeitungseinrichtung und Studio erfolgt.

In einer bevorzugten Ausführungsform des erfindungsgemäßen Verfahrens ist vorgesehen, dass der Zugang zu einer Informations-Sendung und/oder die Nutzung von durch die Informations-Sendung bereitgestellten Funktionen in Abhängigkeit einer Zugangsberechtigung erfolgt. In einer anderen Ausführungsform ist vorgesehen, dass der Zugang zu einer Informations-Sendung nach Einwahl am Portal und Aufruf eines Links auf die Informations-Sendung erfolgt.

In verschiedenen Fällen kann es vorteilhaft sein, nur einen beschränkten Personenkreis an Informations-Sendungen teilnehmen zu lassen (beispielsweise bei einer Fachhändlerschulung). In solchen Fällen ist es vorteilhaft, wenn die Zugangsberechtigungen per E-Mail und/oder eine Nachricht über SMS an einen ausgewählten Personenkreis versandt wird.

In den Fällen, in denen eine Informations-Sendung nicht öffentlich sein soll, sollten auf die von dem TV-Decoder empfangenen Daten nicht über ein öffentliches Netz, wie zum Beispiel das Internet, zugegriffen werden können. Es ist in diesen Fällen vorteilhaft, wenn der TV-Decoder die empfangenen Daten in ein lokales Netz wie beispielsweise ein Local Area Network (LAN) einspeist.

In einer anderen bevorzugten Ausführungsform des erfindungsgemäßen Verfahrens ist vorgesehen, dass der Audio-Rückkanal von einer Datenverarbeitungseinrichtung wie beispielsweise PC oder Arbeitsplatzrechner zum Produktions-Studio der Informationssendung über ein von dem Satellitenübertragungskanal getrenntes Virtual Private Network (VPN) geführt wird. Damit wird der Datenverkehr über den Satelliten entlastet und gleichzeitig nicht teilnahmeberechtigte Personen ausgeschlossen. Insbesondere ist es vorteilhaft, wenn die Sprachkommunikation als Voice over IP (VolP) über den Audio-Rückkanal erfolgt. Zusätzlich können die übertragenen Daten verschlüsselt werden.

In einer weiteren bevorzugten Ausführungsform des erfindungsgemäßen Verfahrens ist vorgesehen, dass die Wiedergabe von Informations-Sendungen auf der Datenverarbeitungseinrichtung, wie beispielsweise PC oder Arbeitsplatzrechner, mit einem oder mehreren Web-Browsern erfolgt. Die Sendungen können beispielsweise in einem Browser starten und für erläuternd eingesetzte grafische Darstellungen oder Video-Sequenzen zusätzliche Browser öffnen. In einer alternativen Ausführungsform ist vorgesehen, dass für die Wiedergabe von Informations-Sendungen in einem Web-Browser mehrere Fenster, wie beispielsweise ein Fenster für die Live-Darstellung des im Studio befindlichen Moderators oder Teachers (Filmfenster) oder ein Fenster zur Darstellung von Grafiken und/oder Tests (Grafikfenster), bereitgestellt werden. Es ist dann vorteilhaft, wenn die für die Wiedergabe von Informations-Sendungen in einem Web-Browser bereitgestellten Fenster in Vollbilddarstellung ausgegeben werden. Das kann bedarfsweise durch die Regie vorgenommen werden.

Um eine manuelle Installation oder Aktualisierung der Software für den Empfang und/oder Nutzung von Informations-Sendungen auf Client-Seite zu vermeiden, erweist es sich als vorteilhaft, wenn die Software nach Anmeldung am Portal durch ein Initial-Applet auf der Datenverarbeitungseinrichtung installiert oder auf der Datenverarbeitungseinrichtung installierte Software nach Anmeldung am Portal aktualisiert wird.

In einer anderen bevorzugten Ausführungsform des erfindungsgemäßen Verfahrens ist vorgesehen, dass die durch die Informations-Sendung bereitgestellten Funktionen
- die Ausführung und/oder Auswertung von Umfragen,
- die Ausführung und/oder Auswertung von Multiple Choice Tests (MCT),
- Aufbau, Vermittlung und/oder Management von Telefonverbindungen,
- Datenübertragung, insbesondere Textübermittlung, zwischen Datenverarbeitungseinrichtung und Produktions-Studio und/oder Regie
umfasst. Insbesondere erweist es sich als vorteilhaft, wenn Umfragen und/oder Tests als HTML-programmierte Dateien ausgebildet sind.

Für eine neutrale Bewertung von Umfragen und/oder Tests ist es von Vorteil, wenn für die Bearbeitung von Umfragen und/oder Tests eine zeitliche Begrenzung vorgegeben wird und nach Ablauf dieser Zeit die Umfrage- und/oder Test-Dateien automatisch für die Bearbeitung geschlossen werden.

In den Fällen, in denen Fragen, die in einer Informations-Sendung aufgetreten sind, etwa weil sie telefonisch oder per Textübermittlung (Telegramm) von einem Zuschauer an den Moderator übermittelt wurden, nicht abschließend beantwortet werden konnten, ist in einer besonderen Ausführungsform vorgesehen, dass an Produktions-Studio und/oder Regie übermittelte Daten und/oder Dateien wie beispielsweise Text-Dateien als E-Mail und/oder als Nachricht über SMS an einen oder mehrere vorgebbare Empfänger weitergeleitet werden.

Eine Anordnung nach der Erfindung ist vorteilhafterweise so eingerichtet, dass sie mindestens einen Prozessor und/oder Chip umfasst, der (die) derart eingerichtet ist (sind), dass ein Verfahren zum Informationsaustausch durchführbar ist, wobei
- Informations-Sendungen in einem Broadcast-Standard produziert und live aus einem Studio gesendet werden;
- eine Digitalisierung der gesendeten Daten und anschließend eine Übertragung der digitalisierten Daten als IP-Multicast-Pakete über Satellit erfolgt;
- zum Empfang der IP-Multicast-Pakete ein TV-Decoder dient, welcher die empfangenen Daten in ein Daten- und/oder Kommunikationsnetz einspeist;
- auf Datenverarbeitungseinrichtungen wie beispielsweise PC oder Arbeitsplatzrechner eine Software installiert wird, wobei die Software, nachdem die Datenverarbeitungseinrichtung an das Daten- und/oder Kommunikationsnetz angeschlossen wurde, den Empfang der Informations-Sendungen und die Nutzung von wenigstens einem Teil der durch eine Informations-Sendung bereitgestellten Funktionen ermöglicht;
- der Zugang zu einer Informations-Sendung durch Einwahl über ein Portal erfolgt und
- ein interaktiver Informationsaustausch durch Nutzung der durch die Informations-Sendung bereitgestellten Funktionen über Kommunikationsverbindungen zwischen Datenverarbeitungseinrichtung und Studio erfolgt.

Ein erfindungsgemäßes Computerprogramm zum Informationsaustausch ermöglicht es einem Computer, nachdem es in den Speicher des Computers geladen worden ist, ein Verfahren zum Informationsaustausch durchzuführen, wobei
- Informations-Sendungen in einem Broadcast-Standard produziert und live aus einem Studio gesendet werden;
- eine Digitalisierung der gesendeten Daten und anschließend eine Übertragung der digitalisierten Daten als IP-Multicast-Pakete über Satellit erfolgt;
- zum Empfang der IP-Multicast-Pakete ein TV-Decoder dient, welcher die empfangenen Daten in ein Daten- und/oder Kommunikationsnetz einspeist;
- auf Datenverarbeitungseinrichtungen wie beispielsweise PC oder Arbeitsplatzrechner eine Software installiert wird, wobei die Software, nachdem die Datenverarbeitungseinrichtung an das Daten- und/oder Kommunikationsnetz angeschlossen wurde, den Empfang der Informations-Sendungen und die Nutzung von wenigstens einem Teil der durch eine Informations-Sendung bereitgestellten Funktionen ermöglicht;
- der Zugang zu einer Informations-Sendung durch Einwahl über ein Portal erfolgt und
- ein interaktiver Informationsaustausch durch Nutzung der durch die Informations-Sendung bereitgestellten Funktionen über Kommunikationsverbindungen zwischen Datenverarbeitungseinrichtung und Studio erfolgt.

Beispielsweise können diese Computerprogramme (gegen Gebühr oder unentgeltlich, frei zugänglich oder passwortgeschützt) downloadbar in einem Daten- oder Kommunikationsnetz bereitgestellt werden. Die so bereitgestellten Computerprogramme können dann durch ein Verfahren nutzbar gemacht werden, bei dem ein Computerprogramm nach Anspruch 16 aus einem elektronischen Datennetz, wie beispielsweise aus dem Internet, auf eine an das Datennetz angeschlossene Datenverarbeitungseinrichtung heruntergeladen wird.

Um ein Verfahren zum Informationsaustausch auszuführen, wird vorteilhafterweise ein computerlesbares Speichermedium eingesetzt, auf dem ein Programm gespeichert ist, das es einem Computer ermöglicht, nachdem es in den Speicher des Computers geladen worden ist, ein Verfahren zum Informationsaustausch durchzuführen, wobei
- Informations-Sendungen in einem Broadcast-Standard produziert und live aus einem Studio gesendet werden;
- eine Digitalisierung der gesendeten Daten und anschließend eine Übertragung der digitalisierten Daten als IP-Multicast-Pakete über Satellit erfolgt;
- zum Empfang der IP-Multicast-Pakete ein TV-Decoder dient, welcher die empfangenen Daten in ein Daten- und/oder Kommunikationsnetz einspeist;
- auf Datenverarbeitungseinrichtungen wie beispielsweise PC oder Arbeitsplatzrechner eine Software installiert wird, wobei die Software, nachdem die Datenverarbeitungseinrichtung an das Daten- und/oder Kommunikationsnetz angeschlossen wurde, den Empfang der Informations-Sendungen und die Nutzung von wenigstens einem Teil der durch eine Informations-Sendung bereitgestellten Funktionen ermöglicht;
- der Zugang zu einer Informations-Sendung durch Einwahl über ein Portal erfolgt und
- ein interaktiver Informationsaustausch durch Nutzung der durch die Informations-Sendung bereitgestellten Funktionen über Kommunikationsverbindungen zwischen Datenverarbeitungseinrichtung und Studio erfolgt.

Das iTV-System ermöglicht den direkten Austausch zwischen Mitarbeitern der Handelsorganisationen und der Hersteller. So ermöglicht iTV die kostengünstige und kontinuierliche Qualifikation der Mitarbeiter. Bei konsequenter Anwendung des iTV wird so eine Optimierung des Fehlerabstellprozesses (im Hinblick auf Zeit und Kosten) erreicht.

Das iTV-System weist somit insbesondere die folgenden Vorteile auf:
- keine Investitionen im Handel;
- VHS-Bildqualität im Fullscreenmodus, Aufnahmestandard ist Betacam SP oder ein vergleichbarer Rundfunkstandard, um diese Mindestqualität zu sichern;
- keine manuelle Softwareinstallation im Handel;
- Nutzung der Standard-Web-Technologie;
- die Teilnahme an einer iTV-Sendung muss von jedem (technisch geeigneten) Arbeitsplatzrechner möglich sein;
- eine Übertragung elektronischer Bilddokumente aus dem Handel an die iTV-Redaktion kann optional unterdrückt werden.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: Komponenten des iTV-Systems;
- Figur 2: einen Zuschauerdialog für Schulungssendungen;
- Figur 3: einen Teacher's-Dialog;
- Figur 4: ein Kontext-Diagramm des iTV-Systems und
- Figur 5: eine Systemübersicht.

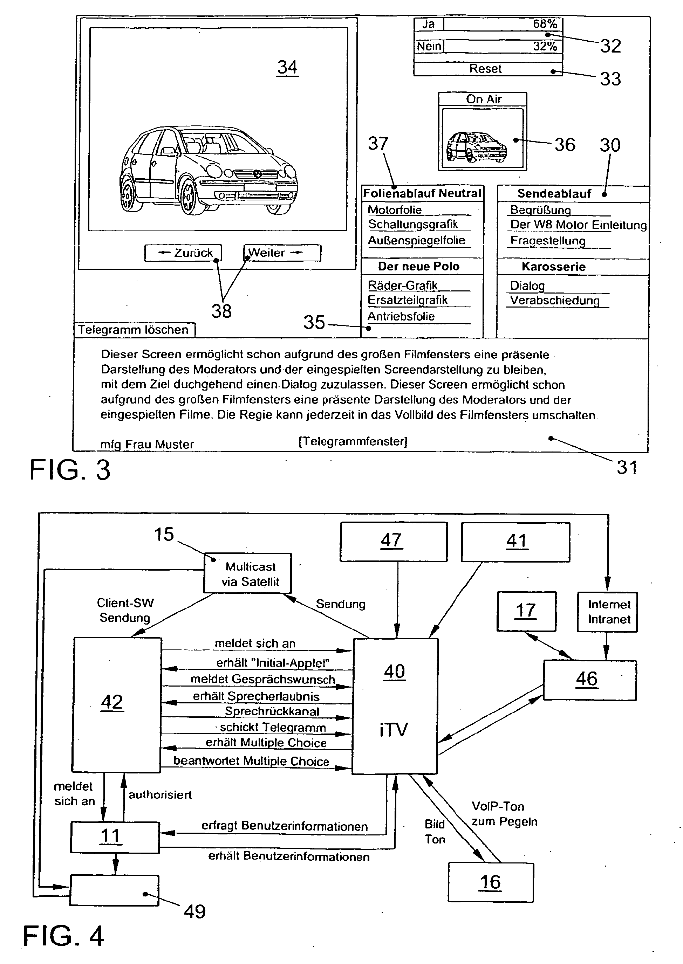

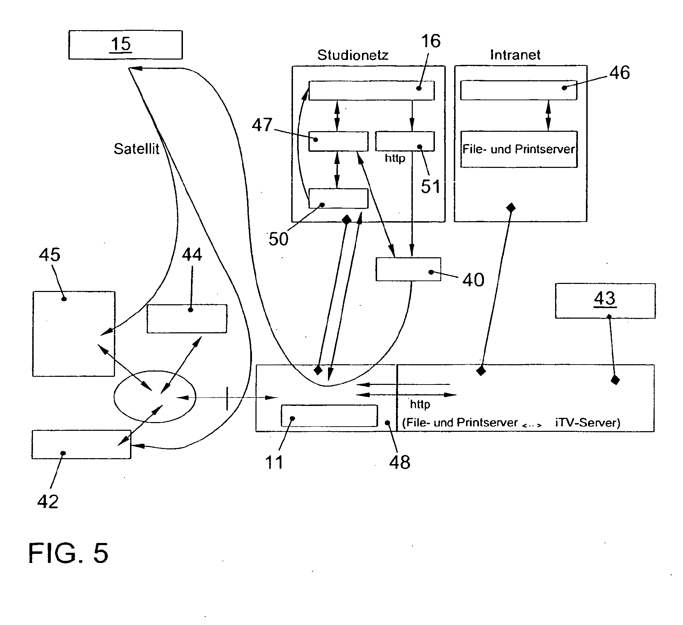

Die Erfindung soll nachfolgend beispielhaft an einem interaktiven Unternehmensfernsehen (iTV) beschrieben werden. Bei dem speziellen Ausführungsbeispiel handelt es sich um ein Live-Broadcast-System, bei welchem der Zuschauer seinen vernetzten Arbeitsplatzrechner zur Teilnahme nutzt. Das beispielhafte Verfahren zum Informationsaustausch sowie die Struktur der als Live-Broadcast-System realisierten Anordnung zum Informationsaustausch sowie das Zusammenwirken der einzelnen Module dieses Systems werden im Folgenden näher beschrieben, wobei die Struktur der als Live-Broadcast-System realisierten Anordnung zusätzlich durch die Figuren 4 und 5 veranschaulicht wird.

Zielgruppen eines solchen interaktiven Unternehmensfernsehens sind die Mitarbeiter des Unternehmens
- in den Partnerbetrieben (Handel);
- in den Vertriebszentren;
- in den Herstellerwerken;
- in den Zulieferbetrieben und
- bei den Importeuren.

Ein Moderator 41 steht vor der Kamera und vermittelt den Teilnehmern 42 an ihren Arbeitsplätzen mit Hilfe von Filmen, Folien und Grafiken Informationen. Der Teilnehmer 42 kann sich live über einen Sprach- und Datenrückkanal in die Sendung einbringen. Dieses interaktive Medium ermöglicht die zeitgleiche Schulung von Mitarbeitern. Schon während der iTV-Sendung kann der Teacher 41 beispielsweise über Multiple-Choice-Tests den Wissensstand der Teilnehmer erfragen und entsprechend darauf reagieren.

Das iTV-Programm wird in einer speziellen Realisierung der Erfindung in einem Fernseh-Studio 16 produziert. Das Programm wird via Satellit 15 ausgestrahlt und kann durch den TV-Dekoder 13 empfangen werden. Über das lokale Netzwerk des Unternehmens gelangt das Programm zu den Arbeitsplatzrechnern 14 der Mitarbeiter. Der PC der Teilnehmer wird zum Dialoginstrument: über ein Headset können die Zuschauer mit dem Moderator 41 im iTV-Studio 16 sprechen. Für den Audiorückkanal wird das VPN (= Virtual Private Network) genutzt.

Das beispielhafte iTV-System basiert auf Webtechnologie, die Darstellung erfolgt im Browser. Die Teilnahme an einer Sendung unterliegt einem Zugriffsberechtigungskonzept. Die Autorisierung erfolgt nach Prüfung der Rechte und erfordert eine Anmeldung am Portal 11.

Zunächst soll der allgemeine Aufbau der iTV-Sendungen beschrieben werden.

### Die iTV-Sendungen

Für die unterschiedlichen Inhalte, die durch die Informations-Sendungen vermittelt werden können, wie beispielsweise
- schnelle, aktuelle Information des Zuschauers und Informationsgewinnung für den Experten,
- Vorstellung mehrerer Themen durch verschiedene Experten,
- Meinungsaustausch zwischen mehreren Vertretern unterschiedlicher beteiligter Zielgruppen oder
- interaktive Schulungssendungen
erweist es sich als vorteilhaft, jeweils eigene Sendungsformate bereitzustellen.

### Anforderungen an die Sendungsformate für iTV

Die Zahl der Sendungsformate richtet sich nach den inhaltlichen Aufgaben, die jede Sendung erfüllen soll. Das Format wird erstens beeinflusst von der Aufgabenstellung. Das Konzept einer Sendung kann beispielsweise vorsehen, dass sie eine Schulungsaufgabe erfüllen oder aktuell und schnell informieren soll. Zweitens ist die Zielgruppe entscheidend. Das Sendungsformat unterscheidet sich somit, je nachdem, ob sich die Sendung an den Mitarbeiter 43 des Herstellers des komplexen Produktes und an Mitarbeiter 44 bei den Zulieferern oder an die Servicemitarbeiter 45 in den Partnerbetrieben richtet.

Auch der Inhalt der Sendung hat Einfluss auf das Sendungsformat. Komplizierte Inhalte sollen mit journalistischen Darstellungsformen verständlich vermitteln werden - zum Beispiel mit Interviews, Filmen, Moderationen oder Talkrunden.

Alle Sendungen haben einen klar definierten Aufbau, ein eigenes Screendesign, eine eigene verständliche Sprache, sie alle werden von der iTV-Redaktion 46 vorbereitet, produziert und gesendet (sie werden damit als iTV-Sendungen erkannt). Jeder Experte, der in den Sendungen auftreten möchte, muss seine Inhalte zusammen mit der Redaktion 46 aufbereiten und sie dem Format der jeweiligen Sendung entsprechend vermitteln.

Für alle Themen lassen sich zum gegenwärtigen Zeitpunkt fünf Sendeformate für das iTV bestimmen:
1. Expertensendung
2. moderierte Expertensendung
3. Gesprächsrunde
4. Schulungssendung
5. Computersystemschulung

Die Sendungsformate erstens bis drittens sind Informationssendungen, die Sendungen viertens und fünftens werden nachfolgend als Schulungssendungen bezeichnet.

### Zuschauer und Informationslieferanten

Um die Qualität der iTV-Sendung zu optimieren, arbeiten vorteilhafterweise bei der Herstellung der Sendung Personen aus speziellen, unterschiedlichen Bereichen/Betriebsteilen zusammen und bringen ihre speziellen Kenntnisse ein. Je nach Ziel der Sendung können somit beispielsweise Mitarbeiter aus den folgenden Gruppen und Standorten/Betriebsteilen an der Herstellung beteiligt sein.

Beispielsweise können die nachfolgend angeführten Gruppen an folgenden Standorten/Betriebsteilen beteiligt werden:
- Produktbetreuung am Hersteller-Standorte,
- Qualitätssicherung am Hersteller-Standorte,
- Forschung und Entwicklung am Hersteller-Standorte,
- Lieferanten überall im Footprint des Hot Bird 3,
- Händler überall in Deutschland,
- Vertriebszentren an den jeweiligen Standorten,
- Importeure überall im Footprint des Hot Bird 3.

In einer iTV-Sendung können diese Gruppen sowohl Zuschauer 42 aber auch Informationslieferanten sein. Ein Hauptaspekt kann beispielsweise auf technischen Themen liegen, die via iTV vermittelt werden sollen.

Auch die Themen sind "interaktiv". Das heißt, sowohl der Informationslieferant als auch die Zuschauer 42 profitieren von den Kenntnissen oder Fragen des Anderen.

### Anforderungen an die Film- und Übertragungsqualität

Im Rahmen der Informations-Sendung werden unter anderem Techniken und Produkte vorgestellt. Das stellt hohe Anforderungen an die technische Bildqualität, denn oftmals werden Details an Motoren oder anderen Bauteilen gezeigt, die der Zuschauer gut erkennen muss. Die Voraussetzung dafür ist eine Produktion des Programms in einem professionellen Broadcaststandard.

Nachfolgend werden die Besonderheiten der einzelnen Sendungsformate kurz erläutert.

### Die Expertensendung

### Ziel:

Schnelle, aktuelle Information des Zuschauers 42 und Informationsgewinnung für den Experten.

### Informationscharakteristik:

- aktuelle Produktinformation,
- Unterweisungen an Teilkomponenten des Produktes, insbesondere des Fahrzeuges,
- Vorstellung neuer Werkzeuge.

Die Sendung ist monothematisch, das heißt, es wird beispielsweise nur ein Thema vorgestellt und besprochen.

### Moderation:

Der Experte steht allein vor der Kamera. Er ist fachkompetent und präsentiert sein Thema allein und ungefiltert. Er muss sein Thema verständlich und nach den Vorgaben der iTV-Redaktion 46 präsentieren können. Er steht den Zuschauern 42 sofort als Informationslieferant zur Verfügung. Im Dialog gewinnen Zuschauer 42 und Experte zusätzliches Wissen für ihre tägliche Arbeit.

### Aufbau der Sendung:

1. Begrüßung
2. Präsentation des Themas, mit zugespielten Filmen, Bildern und/oder Grafiken
3. Erfahrungsaustausch mit den Zuschauern 42
4. Fazit
5. Verabschiedung

Die Sendungen dauern maximal 20 min.

### Die moderierte Expertensendung

Die moderierte Expertensendung weist gegenüber der eben beschriebenen Expertensendung einige Unterschiede auf.

In der moderierten Expertensendung werden mehrere Themen von verschiedenen Experten vorgestellt. Der Moderator 41 führt durch die Sendung und leitet die Experten durch die Sendung. Die moderierte Sendung kann aber auch monothematisch sein, mit nur einem Experten im Studio 16. Das kann zum Beispiel bei besonders komplexen Themen erforderlich sein, oder um einen unerfahrenen Experten bei der Präsentation zu unterstützen.

Die Sendedauer beträgt maximal 30 min.

### Aufbau der Sendung:

1. Begrüßung durch den Moderator 41
2. Vorstellung der Gesprächspartner
3. Präsentation des ersten Themas im Dialog zwischen Moderator 41 und Experten, mit zugespielten Filmen, Bildern und/oder Grafiken
4. Erfahrungsaustausch mit den Zuschauern 42
5. Überleitung zum nächsten Thema
6. Präsentation des zweiten Themas
7. Erfahrungsaustausch mit den Zuschauern 42
8. Fazit
9. Verabschiedung

### Moderation:

Die Sendung wird von einem professionellen Fernsehmoderator beziehungsweise einer professionellen Moderatorin präsentiert. Der Moderator 41 stellt die verschiedenen Themen vor, interviewt die Experten und leitet die Diskussion mit den Zuschauern 42. Seine Aufgabe ist es, den Ablauf der Sendung zu steuern. Es kommt dabei zum Beispiel darauf an, die Sendezeiten für die verschiedenen Themen einzuhalten und den Wechsel von einem Thema zum nächsten zu moderieren.

### Die Gesprächsrunde

### Ziel:

Meinungsaustausch zwischen mehreren Vertretern unterschiedlicher beteiligter Zielgruppen. Ziel ist der gleichzeitige Wissenstransfer zwischen vielen Zielgruppen. Ein Thema soll lösungsorientiert diskutiert werden. Die Gesprächsrunde wird von einem professionellen Fernsehmoderator 41 geleitet.

Die Sendungslänge liegt zwischen 30 und 60 min.

### Informationscharakteristik:

- aktuelle Produktinformation
- Unterweisungen an Teilkomponenten des Produktes, insbesondere des Fahrzeuges
- Vorstellung neuer Werkzeuge

Die Themen, die im Rahmen einer Gesprächsrunde angeschnitten werden können, sind außerordentlich vielfältig. Sie können weit über das oben gezeigte Schema hinausgehen. Denkbar sind hier regelmäßige Gesprächsforen mit den Serviceleitern und Geschäftsführern der Händlerbetriebe über die Einführung eines Produktes im Handel oder andere Themen.

### Moderation:

Es stehen maximal fünf Gäste vor der Kamera. Ein Moderator 41 leitet die Gesprächsrunde, fragt nach, übernimmt die Rolle des kritischen Zuschauers 42, sorgt dafür, dass das Thema nicht zerredet wird. Er sichert die Kommunikation mit den Zuschauern 42 an ihren Arbeitsplätzen, sorgt dafür, dass sie auf ihre Fragen angemessene Antworten erhalten. Er zieht das Fazit am Schluss der Sendung und sorgt dafür, dass die Sendung nicht überzogen wird.

### Aufbau der Sendung:

1. Begrüßung durch den Moderator 41
2. , Präsentation des Themas, mit zugespielten Filmen, Bildern und/oder Grafiken
3. Diskussion der Studiogäste mit den Zuschauern 42, mit zugespielten Filmen, Bildern und/oder Grafiken
4. Fazit des Moderators 41
5. Verabschiedung durch den Moderator 41

### Die Schulungssendung

Via iTV-Application 40 können aber auch in regelmäßigen Abständen interaktive Schulungssendungen abgehalten werden. Die Zuschauer 42 legen im Rahmen der Schulung eine kurze Prüfung ab, und erhalten ein Zertifikat oder Zeugnis, dass sie an der Schulung teilgenommen haben.

Die Sendedauer liegt zwischen 30 und 60 min.

### Informationscharakteristik:

Die Schulungsthemen können sich beispielsweise um ein bestimmtes Produkt bewegen. Es können sowohl kundendienst- als auch verkaufsrelevante Themen sein.

### Moderation:

Die Schulung wird von einem Teacher 41 der entsprechenden Fachabteilung gehalten. Die Teacher 41 sollten hierfür eine gründliche Einweisung in den Ablauf und die Funktionsweise der iTV-Schulungen bekommen. Da die Themenvielfalt sehr groß ist, sollten alle potentiellen iTV-Teacher eine allgemeine Einweisung in das iTV-Projekt bekommen. Kurz vor der Sendung müssen sie dann noch einmal eine Einweisung in die Arbeit mit dem Medium iTV bekommen: Bedienung Teachers-Dialog, Kommunikation mit Redaktion 46 und Regie 47 während der Sendung etc.

### Aufbau der Sendung:

1. Begrüßung durch den Teacher 41
2. interaktive Schulung, mit zugespielten Filmen, Bildern und/oder Grafiken, sowie Muliple-Choice-Tests im Verlauf der Sendung
3. Überleitung des Teachers 41 in den anschließenden Prüfungsteil der Schulungssendung
4. Prüfung
5. Fazit und Verabschiedung durch den Teacher 41

Die Schulungssendung unterscheidet sich in einem wesentlichen Punkt von der Informationssendung: Ihr Sendeablauf wird um einen eigenen Prüfungsteil ergänzt. Nach Ende der interaktiven Schulung kündigt der Teacher 41 eine Prüfung an.

An die Zuschauer 42 wird ein Abschlusstest übertragen, und diese müssen dann in einem fest definierten Zeitraum die Prüfungsaufgaben lösen. Nach Ablauf der vorgegebenen Zeit schließt sich dieser Test, das File wird an die Zentrale übertragen, ausgewertet und der Zuschauer 42 erhält online sein Zertifikat.

### Die Computersystemschulung

Eine spezielle Schulung erfolgt in der Computersystemschulungen. Im Rahmen der Computersystemschulungen werden PC-Systeme via iTV geschult.

### Die Bedienungsoberflächen

### Die Zuschauerdialoge

### Der Zuschauerdialog für Informationssendungen

Für Informationssendungen ist es praktisch, in dem Wiedergabefenster der Sendung auf dem Arbeitsplatzrechner 14 dem Filmfenster mit der Live-Darstellung des im Studio 16 befindlichen Moderators 41 beziehungsweise Teachers 41 einen großen Raum zu geben. Das Wiedergabefenster öffnet sich in einer speziellen Ausführungsform der Erfindung in einem Web-Browser.

Neben dem Filmfenster werden dem Zuschauer 42 für den Dialog Ja/Nein-, Frage- und Telegramm-Buttons bereitgestellt. Dieser Dialog ermöglicht schon aufgrund des großen Filmfensters eine präsente Darstellung des Teachers 41 und der eingespielten Filme. Die Regie 47 kann jederzeit_das Filmfenster in eine Vollbilddarstellung umschalten. Sie kann aber auch entscheiden, in der Dialogdarstellung zu bleiben, mit dem Ziel, durchgehend die Kommunikation zwischen Zuschauer 42 und Teacher 41 zuzulassen.

### Ja/Nein-Buttons

Mit diesen Buttons kann der Teacher 41 geschlossene Fragen an das Publikum 42 richten oder Umfragen durchführen. Eine durch den Teacher 41 gestellte Frage kann der Zuschauer 42 mit JA oder NEIN durch Drücken des entsprechenden Buttons beantworten. Die Buttons sind bis zur Freigabe durch den Regisseur 47 gesperrt. Der Zuschauer 42 erhält nach dem Drücken eine visuelle Bestätigung (JA: der Button wird grün; NEIN: der Button wird rot). Nach dem Drücken sind diese Buttons gesperrt. Und zwar so lange, bis sie wieder von der Regie 47 freigeschaltet werden (zum Beispiel bei einer neuen Abfrage). Die Umfrageergebnisse werden in den Steuerungsdialogen des Teachers 41 und der Regie 47 angezeigt.

### Frage-Button

Der Zuschauer 42 drückt den Frage-Button, wenn er den Teacher 41 über sein Headset ansprechen will. Der Buttontext wechselt in "Bitte warten...", damit der Zuschauer 42 erkennt, dass die Senderegie 47 informiert ist.

Bis der Zuschauer 42 von der Regie 47 freigeschaltet wird, sendet das Clientprogramm alle 20 Sekunden einen einzelnen PING auf den iTV-Server 10, um die VPN-Verbindung aufrecht zu halten.

Wenn der Zuschauer 42 auf Sendung gehen kann, wird er von der Senderegie 47 freigeschaltet. Im Zuschauerdialog wechselt der Buttontext "Bitte warten..." in "Bitte sprechen...". Gleichzeitig erhält der Zuschauer 42 einen Signal-Ton. Nach dem Gespräch erscheint wieder der Schriftzug "Frage" auf dem Button. Der Zuschauer 42 kann erneut seinen Fragewunsch äußern. Der Zuschauer 42 kann seinen Gesprächswunsch jederzeit zurückziehen. Dazu klickt er einmal auf den "Bitte warten..."-Button.

### Telegramm

Der Zuschauer 42 hat die Möglichkeit, seine Frage beziehungsweise Meinung dem Teacher 41 über ein Telegramm mitzuteilen. Diese Textnachricht ist maximal 1.000 Zeichen lang. Der Zuschauer 42 klickt auf den "Telegramm"-Button. Unterhalb des Butttons öffnet sich ein Texteingabefeld. Es verfügt auf der rechten Seite über eine Scrollleiste und über einen Button mit der Aufschrift "senden". Nach Klicken auf den entsprechenden Button erhält er eine Bestätigung, wenn die Nachricht in der Senderegie eingetroffen ist. Es ertönt ein Signalton und es erscheint die Info: "Telegramm in der iTV-Zentrale eingetroffen". Dann schließt sich das Texteingabefeld wieder.

Sollte während der Texteingabe eines Telegramms aus der Regie 47 in die Vollbilddarstellung geschaltet werden, dann muss der Zuschauer 42 die Gelegenheit haben, sein Telegramm zu Ende zu schreiben und abzuschicken. Dazu bleibt das Texteingabefeld im Vordergrund des Bildschirms.

### Zuschauerdialog für Schulungssendungen

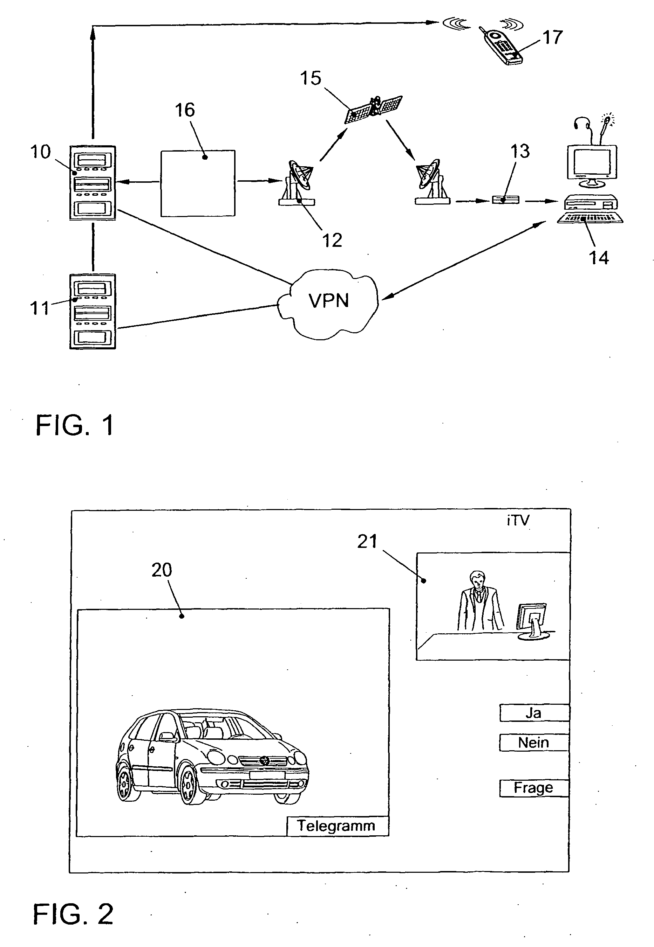

Im Filmfenster 21 rechts oben (vergleiche Figur 2) erscheint der Teacher 41. Sein Vortrag wird unterstützt von Grafiken und Tests, die im Grafikfenster 20 auf der linken Seite erscheinen. Diese Objekte werden ebenfalls über Satellit 15 übertragen und synchron zum Vortrag dargestellt. In einer speziellen Ausführungsform der Erfindung kann vorgesehen sein, dass die Grafiken in einem unabhängigen eigenen Kanal übertragen werden. Dieser Dialog kann jederzeit aus der Regie 47 in den Vollbildmodus (und zwar sowohl Filmfenster 21, als auch Grafikfenster 20) geschaltet werden. Der Regisseur 47 kann auch entscheiden, vom Schulungsdialog in den Informationsdialog zu schalten. Das ist sinnvoll in Sendungsphasen, in denen nicht mit Grafiken gearbeitet wird, aber trotzdem die Kommunikation mit dem Teacher 41 möglich sein soll.

### Logout / Fenster schließen

Der Zuschauer 42 beendet die Applikation, indem er das iTV-Fenster durch den Fenster-Close-Button schließt. Das Schließen ist programmtechnisch abzufangen, damit eine explizite Abmeldung an der Zentrale durchgeführt wird (Billing und Zuschauerquote).

### Die Steuerungsdialoge

Die iTV-Sendungen werden von einem verantwortlichen Redakteur 46 und einem Regisseur 47 gesteuert. Das geschieht mit Hilfe eines Steuerungsdialogs, der sich auf den Computern in der Regie 47 und im Studio 16 befindet. Zusätzlich hat der Teacher 41 die Möglichkeit, selbst durch seine Informations- beziehungsweise Schulungssendung zu führen. Der Teacher's-Dialog ist aber einfacher gestaltet.

Im Folgenden werden zwei Steuerungsdialoge unterschieden:
- Teacher's-Dialog
- Regiedialog

An dieser Stelle werden Kontrollmonitore vernachlässigt. Erwähnt sei nur, dass der Teacher 41 alle Filme die im Verlauf der Sendung gezeigt werden, auf einem eigenen Videomonitor in seinem Moderationstisch verfolgen kann.

### Der Kommunikationsablauf zwischen Schüler und Lehrern läuft vereinfacht so ab:

**Fragen** laufen im Regiedialog auf, werden zum Tonmischpult weitergeleitet und über das Headset des Teachers ausgegeben.

**Telegramme** laufen im Regiedialog auf, werden zum Teacher's-Dialog weitergeleitet und dort ausgegeben oder in einem Archivsystem gespeichert.

**Ja/Nein** laufen im Teacher's-Dialog oder Regiedialog auf und werden über den Teacher's-Dialog ausgegeben oder es werden die Ergebnisse ausgestrahlt.

**Multiple-Choice-Fragen** laufen im Teacher's-Dialog oder Regiedialog auf und werden über den Teacher's-Dialog ausgegeben oder es werden die Ergebnisse ausgestrahlt.

Der Kommunikationsablauf gilt für alle Sendungsformate.

### Anordnung der Arbeitsplätze in Studio 16 und Regie 47

Für die Anordnung der Arbeitsplätze von Moderator/Teacher 41 und Regie 47 ist in einer Ausführungsform eine Aufteilung dieser Arbeitsplätze zwischen Studio 16 und Regie 47 vorgesehen. Dabei befinden sich der Teacher's-Arbeitsplatz (Teacher's-Dialog) und Regiearbeitsplatz 1 (Regiedialog) im Studio 16 und die Regiearbeitsplätze 2 und 3 (Regiedialog) in der Regie 47.

Die Anwesenheit des Redakteurs im Studio 16 (Regiearbeitsplatz 1) gibt dem Teacher 41 ein Gefühl der Sicherheit. Außerdem kann der Redakteur 46 als Ansprechpartner live in die Sendung geschnitten werden. Er kann zum Beispiel eingegangene Telegramme live verlesen. Je nach Länge und Aufwand der Sendung lässt sich eine iTV-Sendung von einem oder mehreren Regiedialogen aus fahren. Bei aufwendigen Produktionen ist folgender Personaleinsatz denkbar:
**Regiearbeitsplatz 1** ist besetzt mit einem Redakteur 46, der sich ausschließlich um die Kommunikation mit den Zuschauern 42 kümmert, Telegramme entgegennimmt, auswählt und nach Ansage aus der Regie 47 vorliest. Er kümmert sich auch um die Annahme von Fragewünschen, wählt aus und leitet diese an das Tonmischpult weiter.
**Regiearbeitsplatz 2** ist besetzt mit dem verantwortlichen Redakteur 46 der Sendung, sowie mit einem Verantwortlichen aus dem Technischen Service Center. Beide sorgen für die inhaltliche Plausibilität der Sendung und greifen ein, wenn der Sendeablauf aus inhaltlichen Gründen umgestellt werden muss.
**Regiearbeitsplatz 3** ist der Platz des Bildschirmes. Von hier wird die Sendung entsprechend dem Sendeplan technisch gesteuert.

### Der Teacher's-Dialog (vergleiche Figur 3)

Der Teacher 41 kann von seinem Monitor aus den Sendeablauf weitgehend selbst steuern. Er bestimmt entsprechend dem im Vorfeld erarbeiteten Grafikplan, wann welche Grafik gesendet wird. Redakteur 46 und Bildmischer unterstützen ihn dabei aus der Regie 47 und können jederzeit eingreifen, da der Regiedialog alle Funktionalitäten des Teacher's-Dialogs aufweist. Wie die Sendung gesteuert wird, bestimmen Redakteur 46, Teacher 41 und Bildmischer gemeinsam.

Im **Sendeablauffenster** 30 kann der Teacher 41 sehen, an welchem Punkt des Sendeplans er angelangt ist. Er sieht, ob ein Film folgt oder ob gleich eine Video-Graphik eingespielt werden muss. Er sieht, ob im Sendeablauf eine Fragerunde geplant ist oder ob das Ende der Sendung naht und er die Sendung abmoderieren kann. Diese Daten erhält er von der Regie 47. Eingesetzte Filme und Videografiken erscheinen auf seinem beigestellten Kontrollmonitor im Moderationstisch. Ihr Einsatz wird im Sendeablauffenster 30 angezeigt.

Im **Telegrammfenster** 31 werden die Fragen angezeigt, die der verantwortliche Redakteur 46 zum Teacher 41 weitergeleitet hat. Das Fenster besitzt eine Scrollleiste. Zusätzlich enthält das Textfeld einen Löschbutton, falls der Teacher 41 die Frage nicht beantworten will. Löscht er die Frage, geht eine entsprechende Meldung an die Regie 47. Der Redakteur 46 kann dann ein neues Telegramm vorlegen.

Im **Ja/Nein-Fenster** 32 wird das Ergebnis der vom Teacher 41 gestellten Umfrage unter den Zuschauern 42 in Prozent angezeigt. Über einen zusätzlichen "Reset"-Button 33 kann das Ergebnis zurückgesetzt werden (auch im Regie-Dialog).

Im **Grafikfenster** 34 sieht der Teacher 41, welche Folie er präsentieren will. Die Folien dieser Sendung liegen in "Grafikformaten" vor. Der Teacher 41 steuert den Einsatz der Folien und der Multiple-Choice-Tests.

Der Teacher 41 kann mit dem **Folienablauffenster** 35 seinen Grafik-Einsatz steuern. Mit einem Klick auf die dort gelisteten Folien, kann er die nächste Folie im Grafikfenster 34 anzeigen. Mit einem Doppelklick auf das Fenster kann er die Folie senden. Sie erscheint dann auch im "**On Air**"-Fenster 36. Diese Funktion hat auch der Redakteur 46 beziehungsweise der Regisseur 47, damit er bei Fehlern eingreifen kann. Im oberen Bereich der Folienleiste ist ein Button "Neutral" 37 vorgesehen. Mit einem Doppelklick auf diesen Button kann der Teacher 41 die neutrale Folie einblenden, die sofort gesendet wird.

Mit den **Weiter-** und **Zurück-**Buttons 38 kann der Teacher 41 Folien wiederholen beziehungsweise zur nächsten Folie weiterklicken. Diese erscheinen dann im Grafikfenster 34 und sind sofort "on air".

**Multiple-Choice-Tests** werden ebenfalls im Grafikfenster 34 angezeigt. Die HTML-programmierten Seiten enthalten die Fragestellung, die möglichen Antworten sowie die Checkboxen für die Antworten. Der Teacher 41 sendet diese Seite mit einem Doppelklick ab. Sie erscheint dann auch im **"On Air"-**Fenster 36. Sie öffnet sich für eine vorher bestimmte Zeit (zum Beispiel 30 Sekunden) in den Zuschauerdialogen. Ist die Zeit abgelaufen, dann schließt sich das Fenster. Hat der Zuschauer 42 seine Antwort gegeben, dann wird das Ergebnis zum Studio 16 übertragen. Danach sind die Checkboxen gesperrt. Die Multiple Choice Seite bleibt aber noch so lange auf dem Zuschauerdialog sichtbar, wie die offizielle Fragezeit dauert. Im Grafikfenster 34 des Teacher's-Dialog erscheint automatisch das Ergebnis des Tests. Mit einem Doppelklick auf das Grafikfenster 34 wird das Ergebnis an die Zuschauer 42 gesendet.

Der Multiple-Choice-Test wird wie jede andere Folie behandelt. Das bedeutet, dass das Videobild weiter eingeblendet wird. Bei Bedarf kann die Regie 47 während des Tests das Grafikfenster 34 als Vollbild darstellen.

Die Daten für Multiple-Choice-Tests und Grafiken sollten zeitnah zur Darstellung auf dem Client übertragen werden, falls sich der Zuschauer 42 erst kurz vor Darstellung des Multiple-Choice-Tests oder der Grafik zugeschaltet hat. Durch einen Befehl, der ebenfalls im Multicast-Stream enthalten ist, wird die Grafik beziehungsweise der Multiple-Choice-Test lediglich im Fenster dargestellt. In die Datenübertragung per Multicast sollte Redundanz integriert werden, damit der Verlust einzelner Pakete nicht dazu führt, dass eine Grafik nicht angezeigt werden kann.

### Der Regiedialog

Mit dem Regiedialog lassen sich alle Sendeformate steuern. Dieser Dialog verfügt über alle Funktionalitäten des Teacher's-Dialog und hält weitere Funktionen wie zum Beispiel den Screen-Button vor.

### Regiedialog:

Wie der Teacher's-Dialog verfügt der Regiedialog auch über ein Telegrammfenster. Im Feld **"Telegramme"** kann der Regisseur 47 erkennen, wer das Telegramm abgeschickt hat. Mit einem Klick auf den Absender wird das Telegramm in einem Textfeld mit Scrollleiste sichtbar. Aus der Regie 47 wird das Telegramm nach einer inhaltlichen Prüfung an den Teacher 41 weitergeleitet und verschwindet aus der Liste. Hat der Teacher 41 ein Telegramm gelöscht, blinkt der Button "weiterleiten". Dann kann die Regie 47 ein neues Telegramm an den Teacher 41 schicken. Darüber hinaus wird ein Telegramm auf dem Teacher's-Dialog grundsätzlich dann überschrieben, wenn ein neues aus der Regie 47 zum Teacher 41 gesandt wird. Alle Telegramme werden gespeichert und nach der Sendung als E-Mail an den Teacher 41 weitergeleitet. Anschließend werden die Telegramme aus der Datenbank gelöscht.

Zusätzlich wird im Regiedialog eine "Anrufliste" bereitgestellt. Im Feld **"Anruferliste"** wird der Gesprächswunsch angezeigt. Der Regisseur 47 sieht Name und Herkunft des Anrufers. In der Anruferliste steht der erste "Anruf" ganz oben. Alle später eintreffenden Anruferwünsche werden darunter angezeigt. Der Regisseur 47 kann in der Liste den Anrufer auswählen, den er zum Teacher 41 weiterleiten will. Das macht er einen Doppelklick auf den Namen. Die Namenszeile ändert ihre Farbe und wird rot. Mit einem weiteren Doppelklick kann der Regisseur 47 das Gespräch beenden. Der Name des Anrufers verschwindet aus der Liste. Der Regisseur 47 kann beliebig Anrufer aus der Liste löschen.

Mit den **"Screen"-Buttons** kann der Regisseur 47 zwischen den beiden Zuschauerdialogen umschalten. Er kann eine Sendung zum Beispiel mit dem Zuschauerdialog für Informationssendungen starten und dann in den Zuschauerdialog für Schulungssendungen wechseln.

Die Buttons mit dem Zusatz **VB** (Vollbild) erlauben es der Regie 47, in die Vollbild-Darstellung zu wechseln. Der Regisseur 47 kann sowohl das Filmfenster, in dem der Teacher 41 zu sehen ist, aber auch das Grafikfenster im Vollbild darstellen. Mit Hilfe der "Screen"-Buttons wird die Vollbilddarstellung aufgehoben.

Jedes Sendungsformat stellt unterschiedliche Anforderungen an die Steuerungsdialoge. Deshalb sollte es möglich sein, bestimmte Funktionsfelder oder Buttons außer Funktion zu setzen. Die Felder erscheinen dann zwar auf dem Bildschirm, sind aber grau unterlegt.

### Der Administratordialog

Für die Konfiguration der Steuerungsdialoge ist ein Administratordialog notwendig. Über diesen Dialog werden auch folgende Arbeiten abgewickelt:
- Auswahl des Sendungsformates
- Definition der Zielgruppe für eine bestimmte Sendung
- Versenden der Einladung per E-Mail 17 an die Zielgruppe
- Benutzerverwaltung des iTV-Systems (Administratoren, Regie, Teacher)
- Import von Grafiken, Texten (zum Beispiel für Grafikablauf und Sendeablauf etc.)
- Erstellen der Multiple-Choice-Tests
- Eingabe von Parametern (zum Beispiel Zeit für Multiple-Choice-Tests etc.)
- Auslesen der Daten der angemeldeten Zuschauer 42
- Erstellung der Sendeablauf- und Grafikablauflisten
- Erstellung von Texteinblendungen während und vor den Sendungen
- Verwaltung aller während einer Sendung gespeicherten Daten
- Darstellung der Zuschauerquote

### Aufbauorganisation/Prozessmodell

### Einrichten von iTV-Benutzern im Portal 11

Die Verwaltung der Benutzer geschieht zentral, beispielsweise durch eine Organisation eines Betriebsteiles. Der Zugriff auf eine Sendung wird über einen Parameter (Rolle) "iTV-berechtigt" geregelt.

### Einladung zu iTV-Sendungen

Für die Einladung zu Sendungen für eine bestimmte Zielgruppe ist es notwendig, folgende Rollen zu definieren:
Handel:
   - iTV-berechtigt
   - Servicetechniker
   - Serviceberater
   - Geschäftsführer
   - Verkäufer
   - Verkaufsleiter
   - Hersteller
Importeur/Lieferant/Vertriebszentrum:
   - iTV-berechtigt
   - Mitarbeiter Aufbau
   - Mitarbeiter Elektrik
   - Mitarbeiter Motor/Getriebe
   - Mitarbeiter Fahrwerk

Die Rollen des Handels werden in einer speziellen Ausführungsform im Portal 11 definiert, weitere Rollen werden hier in einer eigenen Benutzerdatenbank der Anwendung iTV zugeführt. Der Abgleich Portal-iTV-Benutzerdatenbank erfolgt über den identischen Benutzernamen.

Auch ist eine Unterscheidung des Anwenders nach Zugehörigkeit zu Hersteller, Importeur, Lieferant und Vertriebszentrum (Organisationstyp) möglich.

Dazu werden die Methoden des Portals 11 so erweitert, dass eine Suche nach den oben genannten Rollen möglich ist. Als Ergebnis werden USER-ID, GIVE-AME, SURNAME, BRANDNAME, BRANDS, BRAND-ID, ROLES, ROLE, ORGANISATION, ORGTYP, MOBIL, E-MAIL benötigt.

### Anmeldung am Portal 11

Durch die Anmeldung am Portal 11 und Aufruf des Links für das iTV wird auf einen Webserver, den iTV-Server 10, weitergeleitet. Parameter dieser URL ist ein Token, der für die Authentifizierung über die XML-Schnittstelle des Portals 11 genutzt wird.

Die Auswirkungen der gleichzeitigen Anmeldung aller iTV-Teilnehmer innerhalb weniger Minuten vor Beginn einer Sendung sind netzwerk- und servertechnisch zu berücksichtigen.

### Installation Client-Software

Der Aufruf der iTV-Application 40 geschieht durch Anmeldung am Portal 11. Dadurch wird ein Initial-Applet (max. 400 KB) gestartet, dass die eigentliche iTV-Client-Software via Multicast empfängt und installiert. Sollte durch eine vorherige Benutzung die Client-Software bereits installiert sein, dann wird sie im Bedarfsfall aktualisiert. Dazu ist es notwendig, dass die Client-Software bereits zirka 15 Minuten vor einer Sendung mit maximaler Bandbreite per Satellit 15 versendet wird. Während der Sendung wird die Software schmalbandig ebenfalls versendet.

Sollte die Anmeldung am Portal 11 zu einem Zeitpunkt gestartet werden, wenn nicht gesendet wird, dann erscheint bei bereits installierter Client-Software der Startbildschirm mit einem Hinweis auf die nächste Sendung. Die Information über die nächste Sendung holt sich der Client von einem zentralen Server.

Ist die Client-Software noch nicht installiert, dann wird die Empfangskomponente heruntergeladen. Eine Installation der Client-Software kann nicht erfolgen, da sie nicht per Satellit 15 ausgestrahlt wird. Es erscheint trotzdem der Startbildschirm mit dem Hinweis auf die nächste Sendung.

Nach der erfolgreichen Anmeldung ist der Mikrofoneingang der Soundkarte vorzubereiten:
- Aktivierung es Mikrofoneingangs als Aufnahmegerät
- Einpegeln des Aufnahmepegels auf einen mittleren Wert

### Sendungsablauf

Während der Sendung wird überprüft, ob der Teilnehmer aufgrund seiner Rollen- und Organisationszugehörigkeit berechtigt ist, die aktuelle Sendung zu sehen. Ist dies nicht der Fall, erscheint eine Fehlermeldung.

### Nachbearbeitung einer Sendung

Nach einer iTV-Sendung können alle Telegramme einer Sendung mit Absenderinformation (Name, Händler, E-Mail-Adresse, Telefonnummer) und Zeitstempel per E-Mail an den Experten gesendet werden.

### Archivierung

iTV-Sendungen können bei Bedarf auf dem iTV-Server 10 als Stream archiviert werden. Es muss die Möglichkeit bestehen, eine archivierte Sendung neu auszustrahlen oder auf einem Client zu betrachten.

Des Weiteren können ausgestrahlte Sendungen auf dem Referenz-Client mit TV-out-Ausgang der Grafikkarte im Studio 16 auf einem Videoband archiviert werden.

### Datenmodell

Die Daten zu den Zuschauern sind der Beschreibung der XML-Schnittstelle des Portals 11 zu entnehmen. Weitere Attribute wie zum Beispiel weitere Rollen sind analog zu definieren.

### Benutzeroberfläche

Die Benutzerdialoge wurden bereits oben im Abschnitt "Bedienungsoberflächen" beschrieben.

Generell ist zu beachten, dass alle Dialoge und Fehlermeldungen in der Landessprache des Benutzers ausgegeben werden. In der Startphase sind Deutsch und Englisch zu implementieren, jedoch muss eine einfache Erweiterung um andere Sprachen vorgesehen werden.

Fehlermeldungen und Warnhinweise erhalten eine eindeutige Fehlernummerierung im Format "iTVnnnnE" (Fehlermeldungen) beziehungsweise "iTVnnnnW" (Warnhinweise) und sind komplett in einem Handbuch "Support" dokumentiert und erläutert. Dabei ist "nnnn" Platzhalter für eine vierstellige numerische Fehlernummer.

Beschreibung des Hilfesystems:
- Befindet sich der Mauszeiger über einem Button (zum BEispiel "Ja", "Nein", "Sprechen", "Telegramm") wird die jeweilige Funktionalität als Hilfetext eingeblendet (Hints).
- Als Bildschirmauflösung für den Zuschauerdialog wird die Standardbildschirmauflösung gemäß Betriebskonzept festgelegt (derzeit 800x600 Pixel). Die iTV-Anwendung kann von dieser Auflösung als Minimalauflösung ausgehen, die Darstellung muss jedoch auch unter höheren Auflösungen funktionieren.
- Schaltet sich ein Benutzer zu einem Zeitpunkt auf die iTV-Anwendung, wenn noch kein Multicast-Stream gesendet wird, so wird im Videofenster ein vorab definiertes Bild in einem Grafikformat angezeigt. Dieses Bild kann zum Beispiel Hinweise auf den Beginn der Sendung etc. enthalten.
- Das Bild wird durch die Zentrale aktualisiert und beim Start der Clientsoftware von einem zentralen Server im CPN (= Central Partner Network) 48 geladen.

### Schnittstellenkonzept

### Portal 11

Um den Zugang zu iTV zu begrenzen und eine eindeutige Identifizierbarkeit der Zuschauer zu gewährleisten, ist eine Anmeldung zu empfehlen. Diese Aufgabe übernimmt das bereits vorhandene Portal 11.

Durch die Anmeldung am Portal 11 und Aufruf des Links iTV wird auf einen iTV-Webserver 10 weitergeleitet. Parameter dieser URL ist ein Token, der für die Authentifizierung über die XML-Schnittstelle des Portals 11 genutzt wird.

Zu allen iTV-Sendungen muss die Möglichkeit bestehen, die gewünschte Zielgruppe per E-Mail oder SMS 17 einzuladen. Hierzu dient der Einladungsmodul 49. Dazu ist es notwendig, dass die Methoden des Portals 11 so erweitert werden, dass eine Suche nach den oben genannten Rollen möglich ist. Als Ergebnis werden USER-ID, GIVENAME, SURNAME, BRANDS, BRAND, BRAND-ID, ROLES, ROLE, ORGANISATION, ORGTYP, MOBIL, E-MAIL benötigt.

Durch die Anmeldung am Portal 11 erhält der Client vom iTV-Webserver 10 die IP-Multicast-Adresse und die benötigten Ports für den Empfang der Multicast-Daten.

Wird dem Benutzer eine Teilnahme am Empfang einer Sendung verweigert, dann ist eine entsprechende Fehlermeldung am Client auszugeben.

Durch das Zugriffsberechtigungskonzept auf Sendungsebene ist zu jeder Sendung im iTV-System die Zielgruppe zu definieren:
Rollen Handel (GetUserRoles):
   - Servicetechniker
   - Serviceberater
   - Geschäftsführer
   - Verkäufer
   - Verkaufsleiter
   - Hersteller
Rollen Hersteller/Importeur/Lieferant/Vertriebszentrum (neu):
   - Mitarbeiter Aufbau
   - Mitarbeiter Elektrik
   - Mitarbeiter Motor/Getriebe
   - Mitarbeiter Fahrwerk
Organisationstyp (GetOrgTypesData):
   - Hersteller intern
   - Importeur
   - Lieferant
   - Vertriebszentrum

### Ton (VolP-Rückkanal)

Während einer iTV-Sendung soll dem Zuhörer die Möglichkeit gegeben werden, Fragen an den Moderator 41 oder Experten zu stellen. Zu diesem Zweck wird in einer bevorzugten Ausführungsform eine Vioce over IP-Verbindung (VolP) eingesetzt. Realisiert wird diese Verbindung über die vorhandene Netzwerkanbindung (VPN, Framerelay, nicht VSAT) beispielsweise zwischen Händler und Studio 16.

Der VolP-Datenstrom basiert wegen der Echtzeitanforderung auf UDP-Paketen und ist in der Bandbreite (und damit in der Qualität) skalierbar. Durch erforderlichenfalls Anpassung der Bandbreite wird eine sendefähige Tonqualität erreicht.

Für den VolP-Rückkanal werden verhältnismäßig hohe Anforderungen an die Qualität der Datenverbindung vorausgesetzt, da Sprachübertragungen nur dann in akzeptabler Qualität erfolgen können, wenn alle VolP-Pakete in gleichmäßigen Abständen das Ziel erreichen.

Während einer Sendung hat ein User eine Frage. Über einen Button meldet er diese am zentralen System an. Dort empfängt ein Redakteur 46 diese Anfrage. Der Anrufer erhält Sprechberechtigung und das bearbeitete Audiosignal wird ins Studio 16 durchgestellt. Alle Teilnehmer 42 bekommen das Gespräch über den Stream zugesendet. Um Rückkopplungen und Echos zu vermeiden, sind entsprechende Maßnahmen durch das iTV vorzusehen.

Die VolP-Daten werden an zentraler Stelle durch einen VolP-Decoder 50 dekodiert und von einem Rechner über die Soundkarte an das Mischpult gegeben. Dort findet eine Pegelangleichung statt. Da keine Möglichkeit zur Kommunikation mit dem Teilnehmer 42 von der Regie 47 aus möglich ist, kann das Einpegeln erst nach Erteilen der Sprechberechtigung erfolgen!

Für eine mögliche Priorisierung der VolP-Daten sind diese so zu übertragen, dass sie von den Routern eindeutig identifiziert werden können.

### Multicast

Das Video- und das Audiosignal werden von einem Encoder 51 im Studio 16 digitalisiert, an den zentralen iTV-Server 10 weitergeleitet und von dort gemeinsam mit den Steuersignalen und Grafiken als Multicast versendet. Der Encoder 51 sollte wenigstens die Formate MPEG 1 und MPEG 4 mit Datenraten zwischen 200 und 1.700 Mbit/s unterstützen. Außerdem sollte im Vollbildmodus eine VHS-Qualiät garantiert werden.

Video und iTV-Daten werden als IP-Multicast-Pakete über Satellit 15 versendet.

Dazu steht eine dediziert IP-Verbindung zwischen dem iTV-Server 10 und dem Satelliten-Uplink 12 zur Verfügung. Die Multicast-Daten werden von den Routern als Unicasts bis zum Satellitenuplink 12 getunnelt und dort als Multicasts versendet.

### Sicherheit

### Zugriffsrechte

Der Zugriff auf das iTV 40 wird über Zugriffsrechte geregelt. Dabei sind folgende Anwenderklassen zu unterscheiden:
Administratoren
   System
   je Organisationseinheit
Studioteam
   Regie
   Teacher
Zuschauer
   Autohaus
   Vertriebszentrum
   Importeur
   Lieferant
   Mitarbeiter des Herstellers

Die Authentifizierung der Anwender erfolgt durch das Portal 11. Die Zugriffsrechte werden aufgrund der Rollen aus dem Portal 11 beziehungsweise der iTV-Benutzerdatenbank vergeben.

### Schutz vor unbefugtem Zugriff

### Verschlüsselung

Die Verteilung der iTV-Sendung erfolgt über Satellit 15 und ist nicht öffentlich. Außerdem sind die Multicast-Daten auf dem Intranet oftmals jedem zugänglich, obwohl sie aufgrund der Rolle nur für bestimmte Benutzergruppen bestimmt sind. Daher ist eine Verschlüsselung der Daten auf Applikationsebenen vorzusehen, die ein Dekodieren der Daten wirkungsvoll verhindert. Während der Satellitenübertragung werden die Daten zusätzlich verschlüsselt.

Die Erfindung beschränkt sich in ihrer Ausführungsform nicht auf die vorstehend angegebenen bevorzugten Ausführungsbeispiele. Vielmehr ist eine Anzahl von Varianten denkbar, die von der erfindungsgemäßen Anordnung und dem erfindungsgemäßen Verfahren auch bei grundsätzlich anders gearteten Ausführungen Gebrauch machen.

### BEZUGSZEICHENLISTE

- 10: iTV-Server
- 11: Portal
- 12: Satelliten-Uplink
- 13: TV-Dekoder
- 14: Arbeitsplatzrechner
- 15: Satellit
- 16: Studio
- 17: E-Mail oder SMS
- 20: Grafikfenster
- 21: Filmfenster
- 30: Sendeablauffenster
- 31: Telegrammfenster
- 32: Ja/Nein-Fenster
- 33: "Reset"-Button
- 34: Grafikfenster
- 35: Folienablauffenster
- 36: "On Air"-Fenster
- 37: "Neutral"-Button
- 38: Weiter-/Zurück-Button
- 40: iTV-Application
- 41: Moderator, Teacher
- 42: Teilnehmer, Zuschauer, Publikum
- 43: Mitarbeiter des Herstellers
- 44: Mitarbeiter bei Zulieferern
- 45: Servicemitarbeiter in einem Partnerbetrieb
- 46: Redaktion, Redakteur
- 47: Regie, Regiseur
- 48: CPN (= Central Partner Network)
- 49: Einladungsmodul
- 50: VolP-Decoder
- 51: Encoder

## Patentansprüche

1. Verfahren zum Informationsaustausch, wobei
- in einem Studio (16) Informations-Sendungen in einem Broadcast-Standard produziert werden;
- eine Digitalisierung der produzierten Daten und anschließend eine Übertragung der digitalisierten Daten als IP-Multicast-Pakete über Satellit (15) erfolgt, wobei die Informations-Sendungen live aus dem Studio (16) gesendet werden;
- zum Empfang der IP-Multicast-Pakete ein TV-Decoder (13) dient, welcher die empfangenen Daten in ein Daten- und/oder Kommunikationsnetz einspeist;
- auf Datenverarbeitungseinrichtungen wie beispielsweise PC oder Arbeitsplatzrechner (14) eine Software installiert wird, wobei die Software, nachdem die Datenverarbeitungseinrichtung an das Daten- und/oder Kommunikationsnetz angeschlossen wurde, den Empfang der Informations-Sendungen und die Nutzung von wenigstens einem Teil der durch eine Informations-Sendung bereitgestellten Funktionen ermöglicht;
- der Zugang zu einer Informations-Sendung durch Einwahl über ein Portal (11) erfolgt und
- ein interaktiver Informationsaustausch über einen Audio- und/oder Datenrückkanal zwischen der Datenverarbeitungseinrichtung und dem Studio (16) durch Nutzung der durch die Informations-Sendung bereitgestellten Funktionen über Kommunikationsverbindungen zwischen Datenverarbeitungseinrichtung und Studio erfolgt.

2. Verfahren nach Anspruch 1, **dadurch gekennzeichnet, dass** der Zugang zu einer Informations-Sendung und/oder die Nutzung von durch die Informations-Sendung bereitgestellten Funktionen in Abhängigkeit einer Zugangsberechtigung erfolgt.

3. Verfahren nach einem der Ansprüche 1 oder 2, **dadurch gekennzeichnet, dass** der Zugang zu einer Informations-Sendung nach Einwahl am Portal (11) und Aufruf eines Links auf die Informations-Sendung erfolgt.

4. Verfahren nach einem der vorhergehenden Ansprüche, **dadurch gekennzeichnet, dass** die Zugangsberechtigungen per E-Mail und/oder eine Nachricht über SMS (17) an einen ausgewählten Personenkreis versandt wird.

5. Verfahren nach einem der vorhergehenden Ansprüche, **dadurch gekennzeichnet, dass** der TV-Decoder (13) die empfangenen Daten in ein lokales Netz wie beispielsweise ein Local Area Network (LAN) einspeist und/oder der Audio-Rückkanal von einer Datenverarbeitungseinrichtung wie beispielsweise PC oder Arbeitsplatzrechner (14) zum Produktions-Studio (16) der Informationssendung über ein von dem Satellitenübertragungskanal getrenntes Virtual Private Network (VPN) geführt wird.

6. Verfahren nach einem der vorhergehenden Ansprüche, **dadurch gekennzeichnet, dass** die Sprachkommunikation als Voice over IP (VoIP) über den Audio-Rückkanal erfolgt.

7. Verfahren nach einem der vorhergehenden Ansprüche, **dadurch gekennzeichnet, dass** die Wiedergabe von Informations-Sendungen auf der Datenverarbeitungseinrichtung wie beispielsweise PC oder Arbeitsplatzrechner (14) mit einem oder mehreren Web-Browsern erfolgt.

8. Verfahren nach einem der vorhergehenden Ansprüche, **dadurch gekennzeichnet, dass** für die Wiedergabe von Informations-Sendungen in einem Web-Browser mehrere Fenster, wie beispielsweise ein Fenster für die Live-Darstellung des im Studio (16) befindlichen Moderators oder Teachers (41) (Filmfenster) oder ein Fenster zur Darstellung von Grafiken und/oder Tests (Grafikfenster 34), bereitgestellt werden.

9. Verfahren nach einem der vorhergehenden Ansprüche, **dadurch gekennzeichnet, dass** die für die Wiedergabe von Informations-Sendungen in einem Web-Browser bereitgestellten Fenster in Vollbilddarstellung ausgegeben werden.

10. Verfahren nach einem der vorhergehenden Ansprüche, **dadurch gekennzeichnet, dass** die Software nach Anmeldung am Portal (11) durch ein Initial-Applet auf der Datenverarbeitungseinrichtung installiert oder auf der Datenverarbeitungseinrichtung installierte Software nach Anmeldung am Portal (11) aktualisiert wird.

11. Verfahren nach einem der vorhergehenden Ansprüche, **dadurch gekennzeichnet, dass** die durch die Informations-Sendung bereitgestellten Funktionen
- die Ausführung und/oder Auswertung von Umfragen,
- die Ausführung und/oder Auswertung von Multiple Choice Tests (MCT),
- Aufbau, Vermittlung und/oder Management von Telefonverbindungen,
- Datenübertragung, insbesondere Textübermittlung, zwischen Datenverarbeitungseinrichtung und Produktions-Studio (16) und/oder Regie
umfasst.

12. Verfahren nach einem der vorhergehenden Ansprüche, **dadurch gekennzeichnet, dass** Umfragen und/oder Tests als HTML-programmierte Dateien ausgebildet sind.

13. Verfahren nach einem der vorhergehenden Ansprüche, **dadurch gekennzeichnet, dass** für die Bearbeitung von Umfragen und/oder Tests eine zeitliche Begrenzung vorgegeben wird und nach Ablauf dieser Zeit die Umfrage- und/oder Test-Dateien automatisch für die Bearbeitung geschlossen werden.

14. Verfahren nach einem der vorhergehenden Ansprüche, **dadurch gekennzeichnet, dass** an Produktions-Studio (16) und/oder Regie (47) übermittelte Daten und/oder Dateien wie beispielsweise Text-Dateien als E-Mail und/oder als Nachricht über SMS (17) an einen oder mehrere vorgebbare Empfänger weitergeleitet werden.

15. Anordnung mit Prozessoren und/oder Chips, die derart eingerichtet sind, dass ein Verfahren zum Informationsaustausch durchführbar ist, wobei
- in einem Studio (16) Informations-Sendungen in einem Broadcast-Standard produziert werden;
- eine Digitalisierung der produzierten Daten und anschließend eine Übertragung der digitalisierten Daten als IP-Multicast-Pakete über Satellit (15) erfolgt, wobei die Informations-Sendungen live aus dem Studio (16) gesendet werden;
- zum Empfang der IP-Multicast-Pakete ein TV-Decoder (13) dient, welcher die empfangenen Daten in ein Daten- und/oder Kommunikationsnetz einspeist;
- auf Datenverarbeitungseinrichtungen wie beispielsweise PC oder Arbeitsplatzrechner (14) eine Software installiert wird, wobei die Software, nachdem die Datenverarbeitungseinrichtung an das Daten- und/oder Kommunikationsnetz angeschlossen wurde, den Empfang der Informations-Sendungen und die Nutzung von wenigstens einem Teil der durch eine Informations-Sendung bereitgestellten Funktionen ermöglicht;
- der Zugang zu einer Informations-Sendung durch Einwahl über ein Portal (11) erfolgt und
- ein interaktiver Informationsaustausch über einen Audio- und/oder Datenrückkanal zwischen der Datenverarbeitungseinrichtung und dem Studio (16) durch Nutzung der durch die Informations-Sendung bereitgestellten Funktionen über Kommunikationsverbindungen zwischen Datenverarbeitungseinrichtung und Studio erfolgt.

16. Computerprogramm, das es einem Computer ermöglicht, nachdem es in den Speicher des Computers geladen worden ist, ein Verfahren zum Informationsaustausch durchzuführen, wobei
- in einem Studio (16) Informations-Sendungen in einem Broadcast-Standard produziert werden;
- eine Digitalisierung der produzierten Daten und anschließend eine Übertragung der digitalisierten Daten als IP-Multicast-Pakete über Satellit (15) erfolgt, wobei die Informations-Sendungen live aus dem Studio (16) gesendet werden;
- zum Empfang der IP-Multicast-Pakete ein TV-Decoder (13) dient, welcher die empfangenen Daten in ein Daten- und/oder Kommunikationsnetz einspeist;
- auf Datenverarbeitungseinrichtungen wie beispielsweise PC oder Arbeitsplatzrechner (14) eine Software installiert wird, wobei die Software, nachdem die Datenverarbeitungseinrichtung an das Daten- und/oder Kommunikationsnetz angeschlossen wurde, den Empfang der Informations-Sendungen und die Nutzung von wenigstens einem Teil der durch eine Informations-Sendung bereitgestellten Funktionen ermöglicht;
- der Zugang zu einer Informations-Sendung durch Einwahl über ein Portal (11) erfolgt und
- ein interaktiver Informationsaustausch über einen Audio- und/oder Datenrückkanal zwischen der Datenverarbeitungseinrichtung und dem Studio (16) durch Nutzung der durch die Informations-Sendung bereitgestellten Funktionen über Kommunikationsverbindungen zwischen Datenverarbeitungseinrichtung und Studio erfolgt.

17. Computerlesbares Speichermedium, auf dem ein Programm gespeichert ist, das es einem Computer ermöglicht, nachdem es in den Speicher des Computers geladen worden ist, ein Verfahren zum Informationsaustausch durchzuführen, wobei
- in einem Studio (16) Informations-Sendungen in einem Broadcast-Standard produziert werden;
- eine Digitalisierung der produzierten Daten und anschließend eine Übertragung der digitalisierten Daten als IP-Multicast-Pakete über Satellit (15) erfolgt, wobei die Informations-Sendungen live aus dem Studio (16) gesendet werden;
- zum Empfang der IP-Multicast-Pakete ein TV-Decoder (13) dient, welcher die empfangenen Daten in ein Daten- und/oder Kommunikationsnetz einspeist;
- auf Datenverarbeitungseinrichtungen wie beispielsweise PC oder Arbeitsplatzrechner (14) eine Software installiert wird, wobei die Software, nachdem die Datenverarbeitungseinrichtung an das Daten- und/oder Kommunikationsnetz angeschlossen wurde, den Empfang der Informations-Sendungen und die Nutzung von wenigstens einem Teil der durch eine Informations-Sendung bereitgestellten Funktionen ermöglicht;
- der Zugang zu einer Informations-Sendung durch Einwahl über ein Portal (11) erfolgt und
- ein interaktiver Informationsaustausch über einen Audio- und/oder Datenrückkanal zwischen der Datenverarbeitungseinrichtung und dem Studio (16) durch Nutzung der durch die Informations-Sendung bereitgestellten Funktionen über Kommunikationsverbindungen zwischen Datenverarbeitungseinrichtung und Studio erfolgt.

18. Verfahren, bei dem ein Computerprogramm nach Anspruch 16 aus einem elektronischen Datennetz, wie beispielsweise aus dem Internet, auf eine an das Datennetz angeschlossene Datenverarbeitungseinrichtung heruntergeladen wird.

## Claims

1. Method for exchanging information, wherein
- information broadcasts are produced in a broadcast standard in a studio (16);
- the data produced are digitized and the digitized data are subsequently transmitted as IP multicast packets via satellite (15), wherein the information broadcasts are broadcast live from the studio (16);
- a TV decoder (13) serves for receiving the IP multicast packets, said decoder feeding the received data into a data and/or communication network;
- software is installed on data processing devices such as, for example, PC or workstation computer (14), wherein the software, after the data processing device has been connected to the data and/or communication network, enables the reception of the information broadcasts and the utilization of at least a portion of the functions provided by an information broadcast;
- access to an information broadcast is effected by dial-in via a portal (11) and
- interactive exchange of information is effected via an audio and/or data return channel between the data processing device and the studio (16) by utilization of the functions provided by the information broadcast, via communication links between data processing device and studio.

2. Method according to claim 1, **characterized in that** access to an information broadcast and/or the utilization of functions provided by the information broadcast are/is effected in a manner dependent on an access authorization.

3. Method according to either of claims 1 and 2, **characterized in that** access to an information broadcast is effected after dial-in at the portal (11) and call-up of a link to the information broadcast.

4. Method according to any of the preceding claims, **characterized in that** the access authorizations are sent by email and/or a message via SMS (17) to a selected group of persons.

5. Method according to any of the preceding claims, **characterized in that** the TV decoder (13) feeds the received data into a local network such as, for example, a local area network (LAN) and/or the audio return channel is led from a data processing device such as, for example, PC or workstation computer (14) to the production studio (16) of the information broadcast via a virtual private network (VPN) separate from the satellite transmission channel.

6. Method according to any of the preceding claims, **characterized in that** the voice communication is effected as Voice over IP (VoIP) via the audio return channel.

7. Method according to any of the preceding claims, **characterized in that** the reproduction of information broadcasts on the data processing device such as, for example, PC or workstation computer (14) is effected using one or more web browsers.

8. Method according to any of the preceding claims, **characterized in that** for the reproduction of information broadcasts in a web browser, a plurality of windows are provided, such as, for example, a window for the live display of the presenter or teacher (41) situated in the studio (16) (film window) or a window for displaying graphics and/or tests (graphics window 34).

9. Method according to any of the preceding claims, **characterized in that** the windows provided for the reproduction of information broadcasts in a web browser are output in full-frame display mode.

10. Method according to any of the preceding claims, **characterized in that** the software is installed on the data processing device by an initial applet after logging-on at the portal (11) or software installed on the data processing device is updated after logging-on at the portal (11).

11. Method according to any of the preceding claims, **characterized in that** the functions provided by the information broadcast comprise
- the performance and/or evaluation of surveys,
- the performance and/or evaluation of multiple choice tests (MCT),
- set-up, switching and/or management of telephone connections,
- data transmission, in particular text communication, between data processing device and production studio (16) and/or production control.

12. Method according to any of the preceding claims, **characterized in that** surveys and/or tests are embodied as HTML-programmed files.

13. Method according to any of the preceding claims, **characterized in that** a time limitation is predetermined for the processing of surveys and/or tests and the survey and/or test files are automatically closed for processing after this time has elapsed.

14. Method according to any of the preceding claims, **characterized in that** data and/or files communicated to production studio (16) and/or production control (47), such as, for example, text files, are forwarded as email and/or as message via SMS (17) to one or more predeterminable recipients.

15. Arrangement comprising processors and/or chips which are designed in such a way that a method for exchanging information can be carried out, wherein
- information broadcasts are produced in a broadcast standard in a studio (16);
- the data produced are digitized and the digitized data are subsequently transmitted as IP multicast packets via satellite (15), wherein the information broadcasts are broadcast live from the studio (16);
- a TV decoder (13) serves for receiving the IP multicast packets, said decoder feeding the received data into a data and/or communication network;
- software is installed on data processing devices such as, for example, PC or workstation computer (14), wherein the software, after the data processing device has been connected to the data and/or communication network, enables the reception of the information broadcasts and the utilization of at least a portion of the functions provided by an information broadcast;
- access to an information broadcast is effected by dial-in via a portal (11) and
- interactive exchange of information is effected via an audio and/or data return channel between the data processing device and the studio (16) by utilization of the functions provided by the information broadcast, via communication links between data processing device and studio.

16. Computer program which enables a computer, after it has been loaded into the memory of the computer, to carry out a method for exchanging information, wherein
- information broadcasts are produced in a broadcast standard in a studio (16);
- the data produced are digitized and the digitized data are subsequently transmitted as IP multicast packets via satellite (15), wherein the information broadcasts are broadcast live from the studio (16);
- a TV decoder (13) serves for receiving the IP multicast packets, said decoder feeding the received data into a data and/or communication network;
- software is installed on data processing devices such as, for example, PC or workstation computer (14), wherein the software, after the data processing device has been connected to the data and/or communication network, enables the reception of the information broadcasts and the utilization of at least a portion of the functions provided by an information broadcast;
- access to an information broadcast is effected by dial-in via a portal (11) and
- interactive exchange of information is effected via an audio and/or data return channel between the data processing device and the studio (16) by utilization of the functions provided by the information broadcast, via communication links between data processing device and studio.

17. Computer-readable storage medium on which is stored a program which enables a computer, after it has been loaded into the memory of the computer, to carry out a method for exchanging information, wherein
- information broadcasts are produced in a broadcast standard in a studio (16);
- the data produced are digitized and the digitized data are subsequently transmitted as IP multicast packets via satellite (15), wherein the information broadcasts are broadcast live from the studio (16);
- a TV decoder (13) serves for receiving the IP multicast packets, said decoder feeding the received data into a data and/or communication network;
- software is installed on data processing devices such as, for example, PC or workstation computer (14), wherein the software, after the data processing device has been connected to the data and/or communication network, enables the reception of the information broadcasts and the utilization of at least a portion of the functions provided by an information broadcast;
- access to an information broadcast is effected by dial-in via a portal (11) and
- interactive exchange of information is effected via an audio and/or data return channel between the data processing device and the studio (16) by utilization of the functions provided by the information broadcast, via communication links between data processing device and studio.

18. Method in which a computer program according to Claim 16 is downloaded from an electronic data network, such as from the Internet, for example, onto a data processing device connected to the data network.

## Revendications

1. Procédé d'échange d'informations selon lequel
- des émissions d'information sont produites dans un studio (16) à un standard de télédiffusion ;
- une numérisation des données produites est effectuée, suivie d'une transmission des données numérisées sous la forme de paquets de multidiffusion IP par satellite (15), les émissions d'informations étant émises en direct depuis le studio (16) ;
- un décodeur TV (13) sert à la réception des paquets de multidiffusion IP, lequel injecte les données reçues dans un réseau de données et/ou de communication ;
- un logiciel est installé sur des dispositifs de traitement de données tels qu'un PC ou un ordinateur de poste de travail (14), par exemple, le logiciel permettant la réception des émissions d'informations et l'utilisation d'au moins une partie des fonctions mises à disposition par une émission d'informations après le raccordement du dispositif de traitement de données au réseau de données et/ou de communication ;
- l'accès à une émission d'informations s'effectue par une sélection par le biais d'un portail (11) et
- un échange interactif d'informations a lieu par le biais d'un canal de retour audio et/ou de données entre le dispositif de traitement de données et le studio (16) en utilisant les fonctions mises à disposition par l'émission d'informations par le biais de liaisons de communications entre le dispositif de traitement de données et le studio.

2. Procédé selon la revendication 1, **caractérisé en ce que** l'accès à une émission d'informations et/ou l'utilisation des fonctions mises à disposition par l'émission d'informations s'effectuent en fonction d'une autorisation d'accès.

3. Procédé selon l'une des revendications 1 ou 2, **caractérisé en ce que** l'accès à une émission d'informations s'effectue après une sélection sur le portail (11) et l'appel d'un lien sur l'émission d'informations.

4. Procédé selon l'une des revendications précédentes, **caractérisé en ce que** les autorisations d'accès sont envoyées par e-mail et/ou un message est envoyé par SMS (17) à un groupe choisi de personnes.

5. Procédé selon l'une des revendications précédentes, **caractérisé en ce que** le décodeur TV (13) injecte les données reçues dans un réseau local comme, par exemple, un LAN (Local Area Network) et/ou le canal de retour audio est acheminé d'un dispositif de traitement de données tel qu'un PC ou un ordinateur de poste de travail (14), par exemple, au studio de production (16) de l'émission d'informations par le biais d'un réseau privé virtuel (VPN) séparé du canal de transmission par satellite.

6. Procédé selon l'une des revendications précédentes, **caractérisé en ce que** la communication vocale s'effectue sous la forme de VoIP (Voice over IP) par le biais du canal de retour audio.

7. Procédé selon l'une des revendications précédentes, **caractérisé en ce que** la reproduction des émissions d'informations sur le dispositif de traitement de données tel qu'un PC ou un ordinateur de poste de travail (14), par exemple, s'effectue avec un ou plusieurs navigateurs Web.

8. Procédé selon l'une des revendications précédentes, **caractérisé en ce que** plusieurs fenêtres sont mises à disposition pour la reproduction des émissions d'informations dans un navigateur Web, comme par exemple une fenêtre pour la représentation en direct du modérateur ou de l'enseignant (41) qui se trouve dans le studio (16) (fenêtre de film) ou une fenêtre pour la représentation de graphiques et/ou de tests (fenêtre graphique 34).

9. Procédé selon l'une des revendications précédentes, **caractérisé en ce que** les fenêtres mises à disposition pour la reproduction des émissions d'informations dans un navigateur Web sont affichées en mode plein écran.

10. Procédé selon l'une des revendications précédentes, **caractérisé en ce qu'**après la connexion au portail (11), le logiciel est installé sur le dispositif de traitement de données par une applet initiale ou alors le logiciel installé sur le dispositif de traitement de données est actualisé après la connexion au portail (11).

11. Procédé selon l'une des revendications précédentes, **caractérisé en ce que** les fonctions mises à disposition par l'émission d'informations incluent
- l'exécution et/ou l'interprétation de sondages,
- l'exécution et/ou l'interprétation de questionnaires à choix multiples (QCM),
- l'établissement, la commutation et/ou la gestion de communications téléphoniques,
- la transmission de données, notamment la communication de textes, entre le dispositif de traitement de données et le studio de production (16) et/ou la régie.

12. Procédé selon l'une des revendications précédentes, **caractérisé en ce que** les sondages et/ou les questionnaires sont réalisés sous la forme de fichiers programmés en HTML.

13. Procédé selon l'une des revendications précédentes, **caractérisé en ce qu'**une limitation dans le temps est prédéfinie pour le traitement des sondages et/ou des questionnaires et les fichiers de sondage et/ou de questionnaire sont automatiquement fermés à l'édition après écoulement de ce temps.

14. Procédé selon l'une des revendications précédentes, **caractérisé en ce que** les données et/ou les fichiers communiqués au studio de production (16) et/ou à la régie (47), comme par exemple des fichiers texte, sont transmis sous la forme d'e-mail et/ou de message par SMS (17) à un ou plusieurs destinataires pouvant être prédéfinis.

15. Arrangement comprenant des processeurs et/ou des puces qui sont configurés de telle sorte qu'il est possible de mettre en oeuvre un procédé d'échange d'informations, selon lequel
- des émissions d'informations sont produites dans un studio (16) à un standard de télédiffusion ;
- une numérisation des données produites est effectuée, suivie d'une transmission des données numérisées sous la forme de paquets de multidiffusion IP par satellite (15), les émissions d'informations étant émises en direct depuis le studio (16) ;
- un décodeur TV (13) sert à la réception des paquets de multidiffusion IP, lequel injecte les données reçues dans un réseau de données et/ou de communication ;
- un logiciel est installé sur des dispositifs de traitement de données tels qu'un PC ou un ordinateur de poste de travail (14), par exemple, le logiciel permettant la réception des émissions d'informations et l'utilisation d'au moins une partie des fonctions mises à disposition par une émission d'informations après le raccordement du dispositif de traitement de données au réseau de données et/ou de communication ;
- l'accès à une émission d'informations s'effectue par une sélection par le biais d'un portail (11) et
- un échange interactif d'informations a lieu par le biais d'un canal de retour audio et/ou de données entre le dispositif de traitement de données et le studio (16) en utilisant les fonctions mises à disposition par l'émission d'informations par le biais de liaisons de communications entre le dispositif de traitement de données et le studio.

16. Programme informatique qui permet à un ordinateur, après avoir été chargé dans la mémoire de l'ordinateur, de mettre en oeuvre un procédé d'échange d'informations, selon lequel
- des émissions d'information sont produites dans un studio (16) à un standard de télédiffusion ;
- une numérisation des données produites est effectuée, suivie d'une transmission des données numérisées sous la forme de paquets de multidiffusion IP par satellite (15), les émissions d'informations étant émises en direct depuis le studio (16) ;
- un décodeur TV (13) sert à la réception des paquets de multidiffusion IP, lequel injecte les données reçues dans un réseau de données et/ou de communication ;
- un logiciel est installé sur des dispositifs de traitement de données tels qu'un PC ou un ordinateur de poste de travail (14), par exemple, le logiciel permettant la réception des émissions d'informations et l'utilisation d'au moins une partie des fonctions mises à disposition par une émission d'informations après le raccordement du dispositif de traitement de données au réseau de données et/ou de communication ;
- l'accès à une émission d'informations s'effectue par une sélection par le biais d'un portail (11) et
- un échange interactif d'informations a lieu par le biais d'un canal de retour audio et/ou de données entre le dispositif de traitement de données et le studio (16) en utilisant les fonctions mises à disposition par l'émission d'informations par le biais de liaisons de communications entre le dispositif de traitement de données et le studio.

17. Support d'enregistrement lisible par ordinateur sur lequel est enregistré un programme qui permet à un ordinateur, après avoir été chargé dans la mémoire de l'ordinateur, de mettre en oeuvre un procédé d'échange d'informations, selon lequel
- des émissions d'informations sont produites dans un studio (16) à un standard de télédiffusion ;
- une numérisation des données produites est effectuée, suivie d'une transmission des données numérisées sous la forme de paquets de multidiffusion IP par satellite (15), les émissions d'informations étant émises en direct depuis le studio (16) ;
- un décodeur TV (13) sert à la réception des paquets de multidiffusion IP, lequel injecte les données reçues dans un réseau de données et/ou de communication ;
- un logiciel est installé sur des dispositifs de traitement de données tels qu'un PC ou un ordinateur de poste de travail (14), par exemple, le logiciel permettant la réception des émissions d'informations et l'utilisation d'au moins une partie des fonctions mises à disposition par une émission d'informations après le raccordement du dispositif de traitement de données au réseau de données et/ou de communication ;
- l'accès à une émission d'informations s'effectue par une sélection par le biais d'un portail (11) et
- un échange interactif d'informations a lieu par le biais d'un canal de retour audio et/ou de données entre le dispositif de traitement de données et le studio (16) en utilisant les fonctions mises à disposition par l'émission d'informations par le biais de liaisons de communications entre le dispositif de traitement de données et le studio.

18. Procédé selon lequel un programme informatique selon la revendication 16 est téléchargé depuis un réseau de données électronique, comme par exemple depuis l'Internet, sur un dispositif de traitement de données raccordé au réseau de données.
